Europäisches Patentamt

European Patent Office

Office européen des brevets

(19)

(11) **EP 0 983 678 B1**

(12) **FASCICULE DE BREVET EUROPEEN**

(45) Date de publication et mention
de la délivrance du brevet:
**03.08.2005  Bulletin 2005/31**

(51) Int Cl.[7]: **H04M 9/08**

(86) Numéro de dépôt international:
**PCT/FR1998/001010**

(21) Numéro de dépôt: **98925756.3**

(22) Date de dépôt: **20.05.1998**

(87) Numéro de publication internationale:
**WO 1998/053595 (26.11.1998 Gazette 1998/47)**

(54) **PROCEDE ET DISPOSITIF DE REDUCTION D' ECHO ACOUSTIQUE MULTIVOIES ET DE SPATIALISATION SONORE**

**VERFAHREN UND GERÄT ZUR VERRINGERUNG DES AKOUSTISCHEN MEHRWEGECHOS UND FÜR RAUMKLANGEFFEKT**

**METHOD AND DEVICE FOR REDUCING MULTI-CHANNEL ACOUSTIC ECHO AND ADAPTING SOUND TO SPACE CONDITIONS**

(84) Etats contractants désignés:
**DE GB IT**

(30) Priorité: **21.05.1997  FR 9706191**

(43) Date de publication de la demande:
**08.03.2000  Bulletin 2000/10**

(73) Titulaire: **FRANCE TELECOM**
**75015 Paris (FR)**

(72) Inventeurs:
- **THOMAS, Jean-Philippe**
  **F-22350 Trezeny (FR)**
- **SALIOU, Alain**
  **F-22300 Lannion (FR)**
- **EMERIT, Marc**
  **F-22200 Guingamp (FR)**

- **MAHIEUX, Yannick**
  **F-22140 Bégard (FR)**

(74) Mandataire: **Fréchède, Michel et al**
**Cabinet Plasseraud**
**65/67 rue de la Victoire**
**75440 Paris Cedex 09 (FR)**

(56) Documents cités:
**EP-A- 0 709 999**

- **HIROSHI OIKAWA ET AL: "AUDIO TELECONFERENCING SET WITH MULTIPATH ECHO CANCELLER" REVIEW OF THE ELECTRICAL COMMUNICATION LABORATORIES., vol. 36, no. 2, 1988, TOKYO JP, pages 217-223, XP002059139**

**Description**

La présente invention concerne un procédé et un dispositif de réduction d'écho acoustique multivoies, et de restitution du relief sonore ou "spatialisation" sonore. Elle trouve une application particulièrement importante dans les systèmes de transmission numérique de signaux sonores sur plusieurs canaux de transmission entre un site local et un ou plusieurs sites distants, chaque site comprenant plusieurs microphones et plusieurs haut-parleurs. De tels systèmes sont dits "multivoies" à la prise de son (le son est capté par plusieurs microphones), à la transmission (sur plusieurs canaux) et à la restitution du son (au moyen de plusieurs haut-parleurs).

Le document EP-A-709999 ainsi que l'article "Teleconferencing set with multipath echo canceller de H. Oikawa, Review of the Electrical Communications Laboratories, Vol. 36, N° 2, 1988, pages 217-223, décrivent de tels systèms.

A titre d'exemple non limitatif, la présente invention sera ici décrite dans son application aux salles de visioconférence, aussi bien pour la transmission entre deux salles, dans une configuration dite "point à point" (où l'image de la salle distante est affichée sur un écran, ou bien plusieurs points de vue de la salle distante sont affichés sur plusieurs écrans) que pour la transmission dans un réseau comportant plus de deux salles, dans une configuration dite "multipoint" (où les images des salles distantes sont affichées sur plusieurs écrans).

Dans une salle comportant N microphones et M haut-parleurs, il existe NxM chemins d'écho acoustique. D'une part, les systèmes classiques d'annulation d'écho acoustique ne permettent pas de réaliser un contrôle de l'écho à un coût raisonnable dans un tel contexte. D'autre part, associer pour la transmission chaque microphone d'une salle locale à un haut-parleur d'une salle distante, afin d'obtenir la meilleure spatialisation possible du son, multiplierait le nombre de canaux de transmission, ce qui entraînerait un coût de transmission prohibitif pour un développement commercial.

On connaît, outre les systèmes classiques d'annulation d'écho acoustique, des systèmes de réduction d'écho acoustique fondés sur des variations de niveau des signaux sonores. Un inconvénient majeur généralement rencontré dans de tels systèmes est la limitation de l'interactivité, c'est-à-dire une baisse de qualité de réception, notamment une variation sensible du niveau sonore en réception, dans des situations dites de "double parole", c'est-à-dire en cas de présence simultanée d'un signal sonore local utile et d'un signal sonore utile provenant de la salle distante, dans une salle locale donnée.

La présente invention vise à fournir un procédé et un dispositif de réduction d'écho acoustique multivoies et de spatialisation, qui permettent de réduire l'écho tout en préservant l'interactivité et qui, tout en utilisant un nombre relativement faible de canaux de transmission, assurent la restitution du relief sonore. Dans son application à la visioconférence, la présente invention permet de rapprocher la réunion à distance d'une situation de communication naturelle.

Dans ce but, l'invention propose notamment un procédé de réduction d'écho acoustique et de spatialisation, dans un système de transmission numérique de signaux sonores sur P canaux de transmission, entre un site local et au moins un site distant, comportant chacun N microphones et M haut-parleurs, N, M, P étant des entiers, les valeurs de N et M pouvant différer selon les sites, suivant lequel :

(a) on calcule un cumulant pour chaque signal microphonique $x_i(n)$ du site local, i étant un entier compris entre 1 et N et n désignant le rang temporel des échantillons, et on calcule un cumulant pour chaque signal de haut-parleur $z_j(n)$ du site local, j étant un entier compris entre 1 et M (la notion de cumulant est définie plus loin) ; puis, pour tout i, $1 \leq i \leq N$,

(b) on calcule une première atténuation $G_{mic}(i,n)$ pour le signal microphonique $x_i(n)$ du site local à partir d'un rapport entre des cumulants obtenus précédemment ;

(c) on modifie la première atténuation $G_{mic}(i,n)$ de façon à obtenir une deuxième atténuation $G'_{mic}(i,n)$ définie comme suit :

$$G'_{mic}(i,n) = S_1(G_{mic}(i,n))$$

où $S_1(G_{mic}(i,n)) = s$ si $G_{mic}(i,n) \leq s$,
$S_1(G_{mic}(i,n)) = G_{mic}(i,n)$ si $s < G_{mic}(i,n) < 1$ et
$S_1(G_{mic}(i,n)) = 1$ si $G_{mic}(i,n) \geq 1$,
s étant un seuil minimal prédéterminé strictement inférieur à 1 ;

(d) à partir des cumulants de signaux microphoniques et de haut-parleurs calculés précédemment, on détermine
si le signal microphonique $x_i(n)$ est un signal d'écho seul ou un signal provenant uniquement du site local, suivant un premier cas, ou
si le signal microphonique $x_i(n)$ présente des composantes provenant du site local et d'autres composantes provenant du site distant, suivant un second cas ;

(e) on calcule une troisième atténuation $G''_{mic}(i,n)$, qui dans ledit premier cas, est égale à la deuxième atténuation $G'_{mic}(i,n)$ et dans ledit second cas, est égale à la deuxième atténuation $G'_{mic}(i,n)$ dans le calcul de laquelle on augmente le seuil minimal s d'une valeur prédéterminée ;

(f) on calcule une quatrième atténuation $\Gamma(i,n)$ à partir d'un rapport entre des cumulants de signaux microphoniques ;

(g) on modifie la quatrième atténuation $\Gamma(i,n)$ de façon à obtenir une cinquième atténuation $\Gamma'(i,n)$ définie comme suit :

$$\Gamma'(i,n) = S_2(\Gamma(i,n))$$

où $S_2(\Gamma(i,n)) = s'$ si $\Gamma(i,n) \leq s'$,
$S_2(\Gamma(i,n)) = \Gamma(i,n)$ si $s' < \Gamma(i,n) < 1$ et
$S_2(\Gamma(i,n)) = 1$ si $\Gamma(i,n) \geq 1$,
s' étant un seuil minimal prédéterminé strictement inférieur à 1 ;

(h) on calcule le produit des troisième et cinquième atténuations $G''_{mic}(i,n)$ et $\Gamma'(i,n)$ obtenues précédemment, de façon à obtenir une atténuation globale $G^*_{mic}(i,n)$ définie par :

$$G^*_{mic}(i,n) = G''_{mic}(i,n).\Gamma'(i,n) ;$$

(i) on modifie l'atténuation globale $G^*_{mic}(i,n)$ de façon à obtenir un coefficient de pondération $\beta_i(n)$ défini comme suit :

$$\beta_i(n) = S_4(G^*_{mic}(i,n))$$

où $S_4(G^*_{mic}(i,n)) = s''$ si $G^*_{mic}(i,n) \leq s''$ et
$S_4(G^*_{mic}(i,n)) = G^*_{mic}(i,n)$ si $s'' < G^*_{mic}(i,n) \leq 1$,
s'' étant un seuil minimal prédéterminé strictement inférieur à 1 ;

(j) on transmet sur chaque canal de transmission un signal $y_k(n)$, k étant un entier compris entre 1 et P, sous forme d'une combinaison linéaire des signaux microphoniques $x_i(n)$ pondérés, définie comme suit :

$$y_k(n) = \sum_{i=1}^{N} \alpha_{k,i}(n).\beta_i(n).x_i(n)$$

où $\alpha_{k,i}(n)$ désigne des coefficients de codage réels prédéterminés et $\beta_i(n)$ désigne les coefficients de pondération obtenus précédemment ;

puis, pour tout entier j, $1 \leq j \leq M$ :

(k) on calcule, pour le signal de haut-parleur $z_j(n)$ du site distant, une sixième atténuation $G_{HP}(j,n)$ à partir de cumulants calculés pour chaque signal $y_k(n)$ transmis en provenance du site local ;

($\ell$) on modifie la sixième atténuation $G_{HP}(j,n)$ de façon à obtenir un coefficient de pondération $\lambda_j(n)$ défini comme suit :

$$\lambda_j(n) = S_3(G_{HP}(j,n))$$

où $S_3(G_{HP}(j,n)) = s^*$ si $G_{HP}(j,n) \leq s^*$,
$S_3(G_{HP}(j,n)) = G_{HP}(j,n)$ si $s^* < G_{HP}(j,n) < 1$ et
$S_3(G_{HP}(j,n)) = 1$ si $G_{HP}(j,n) \geq 1$,
s* étant un seuil minimal prédéterminé strictement inférieur à 1 ;

(m) on détermine le signal de haut-parleur $z_j(n)$ du site distant à partir d'une combinaison linéaire des signaux transmis $y_k(n)$ pondérés, définie comme suit :

$$z_j(n) = \lambda_j(n).\sum_{k=1}^{P} \gamma_{j,k}(n).y_k(n)$$

où $\gamma_{j,k}(n)$ désigne des coefficients de décodage réels prédéterminés, et où $\lambda_j(n)$ désigne les coefficients de pondération obtenus précédemment ; et
(n) on émet sur le $j^{ème}$ haut-parleur du site distant le signal de haut-parleur $z_j(n)$ ainsi obtenu.

Les opérations ci-dessus sont effectuées de façon similaire dans toutes les salles du réseau considéré, à la fois en émission et en réception. Dans toute la suite, pour simplifier, on considère une salle donnée dite "locale" et une ou plusieurs salles "distantes", et on ne décrit que les opérations effectuées dans la salle locale à l'émission et les opérations effectuées dans la ou les salle(s) distante(s) à la réception, bien que des opérations similaires soient également effectuées dans la ou les salle(s) distante(s) à l'émission et dans la salle locale à la réception, respectivement.

Dans le même but que décrit plus haut, la présente invention propose également un dispositif de réduction d'écho acoustique et de spatialisation, dans un système de transmission numérique de signaux sonores sur P canaux de transmission, entre un site local et au moins un site distant, comportant chacun N microphones et M haut-parleurs, N, M, P étant des entiers, les valeurs de N et M pouvant différer selon les sites, caractérisé en ce qu'il comprend :

un module de codage des signaux sonores, recevant en entrée N signaux numériques $x_i(n)$ provenant respectivement des N microphones du site local, où i est un entier compris entre 1 et N, et n est un entier qui désigne le rang temporel des échantillons, ce module de codage fournissant en sortie P signaux numériques $y_k(n)$, où k est un entier compris entre 1 et P, définis par la formule suivante :

$$y_k(n) = \sum_{i=1}^{N} \alpha_{k,i}(n).\beta_i(n).x_i(n)$$

où $\alpha_{k,i}(n)$ désigne des coefficients de codage réels prédéterminés, et
où $\beta_i(n)$ désigne des coefficients de pondération qui dépendent de cumulants des signaux reçus par les microphones du site local et de cumulants des signaux émis par les haut-parleurs du site local,
les P signaux $y_k(n)$ étant transmis respectivement sur les P canaux de transmission entre le site local et le site distant ; et
un module de décodage des signaux sonores, recevant en entrée les P signaux $y_k(n)$ et fournissant en sortie M signaux numériques $z_j(n)$ à émettre respectivement par les M haut-parleurs de chaque site, où j est un entier compris entre 1 et M, définis par la formule suivante :

$$z_j(n) = \lambda_j(n).\sum_{k=1}^{P} \gamma_{j,k}(n).y_k(n)$$

où $\gamma_{j,k}(n)$ désigne des coefficients de décodage réels prédéterminés, et
où $\lambda_j(n)$ désigne des coefficients de pondération qui dépendent des signaux $y_k(n)$.

D'autres caractéristiques et avantages de la présente invention apparaîtront à la lecture de la description détaillée qui suit de modes particuliers de réalisation, donnés à titre d'exemples non limitatifs. La description se réfère aux dessins annexés, dans lesquels :

- la figure 1 représente de façon schématique et simplifiée une salle de visioconférence classique du type à plusieurs microphones et plusieurs haut-parleurs, dans laquelle la disposition des principaux éléments est donnée à titre d'exemple non limitatif ;
- la figure 2 est un organigramme général du procédé de la présente invention, dans un mode particulier de réalisation ;
- la figure 3 représente de façon schématique le dispositif de la présente invention, dans un mode particulier de réalisation ;

- la figure 4 représente de façon schématique un module de codage compris dans le dispositif de la présente invention, dans un mode particulier de réalisation ; et
- la figure 5 représente de façon schématique un module de décodage compris dans le dispositif de la présente invention, dans un mode particulier de réalisation.

Dans toute la suite, on décrit la présente invention dans son application à un réseau d'au moins deux salles de visioconférence. Cette application fournit un exemple non limitatif de système de transmission numérique de signaux sonores entre un site local et un ou plusieurs sites distants comportant chacun plusieurs microphones et plusieurs haut-parleurs. Les signaux sonores considérés ici sont généralement des signaux de parole.

On suppose dans la présente description que dans une salle donnée, qu'il s'agisse d'une salle locale ou distante, les microphones et les haut-parleurs sont choisis de telle façon que le couplage entre haut-parleurs et microphones est négatif. Cela signifie que la valeur maximale, en dB, de la fonction de transfert entre l'entrée des amplificateurs des haut-parleurs et la sortie des préamplificateurs auxquels sont connectés les microphones est négative. L'énergie d'un signal issu du préamplificateur d'un microphone et provenant d'un haut-parleur de la même salle est donc inférieure à l'énergie du signal en entrée de l'amplificateur de ce haut-parleur. Le couplage négatif assure la stabilité de la boucle acoustique ; en particulier, il n'y a pas d'effet Larsen. D'autre part, cela permet de discriminer entre l'écho et la parole distante utile, puisque le niveau moyen de l'écho est toujours inférieur au niveau moyen de la parole distante utile. L'hypothèse du couplage négatif est vérifiée dans la plupart des salles de visioconférence classiques.

On appelle "signal microphonique à un instant donné" l'ensemble des signaux sonores captés par un microphone à cet instant. On appelle "signal de haut-parleur à un instant donné" le signal sonore émis par un haut-parleur à cet instant.

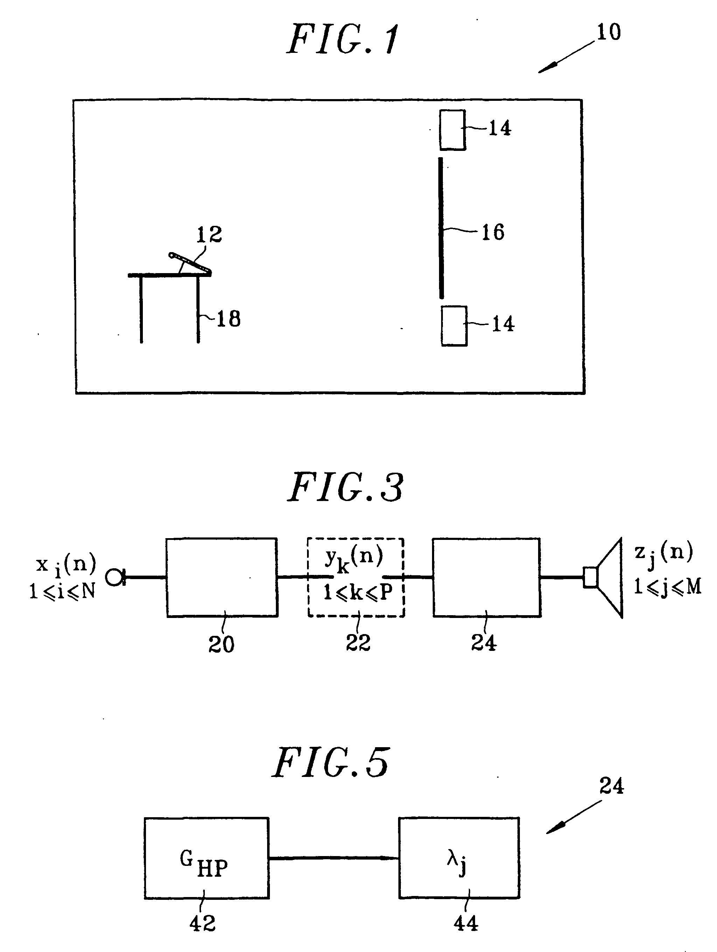

On rappelle, en relation avec la figure 1, qu'une salle de visioconférence 10 classique du type à plusieurs microphones et plusieurs haut-parleurs comprend plusieurs microphones 12, plusieurs haut-parleurs 14, et au moins un écran 16, en plus du mobilier courant (généralement table(s) et siège(s)). Pour plus de clarté, on a représenté seulement un microphone 12, deux haut-parleurs 14, un écran 16 et une table 18.

On considère dans toute la suite une salle locale ayant N microphones et M haut-parleurs, les entiers N et M n'étant pas nécessairement égaux, et une ou plusieurs salles distantes, selon le mode de réalisation envisagé, ayant également N microphones et M haut-parleurs. Les entiers N et M peuvent être différents d'une salle du réseau à une autre.

Les salles de visioconférence considérées ne comportent généralement pas plus de 12 microphones et 16 haut-parleurs.

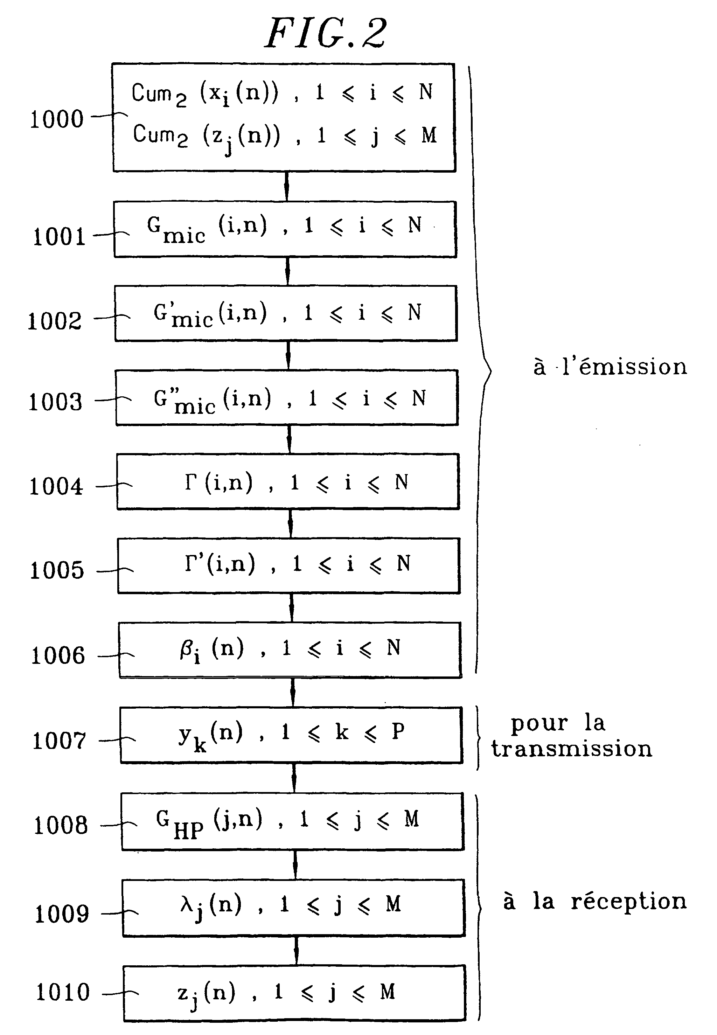

On décrit d'abord le procédé de la présente invention, dans un mode particulier de réalisation, à l'aide de la figure 2.

Au cours d'une première étape, on calcule des grandeurs statistiques appelées cumulants, sur les signaux de chaque microphone et haut-parleur de la salle locale. Ces grandeurs décrivent les distributions des signaux microphoniques et de haut-parleur. A titre d'exemple non limitatif, on peut les estimer soit en large bande, soit sur certaines bandes de fréquence.

On rappelle que les cumulants sont les dérivées partielles successives de la seconde fonction caractéristique d'un vecteur aléatoire, prises à l'origine. En particulier, on montre que pour deux signaux a et b, si a = b = x alors le cumulant d'ordre 2 des signaux a et b, appelé dans ce cas auto-cumulant d'ordre 2 du signal x, représente l'énergie du signal x, et si a ≠ b alors le cumulant d'ordre 2 des signaux a et b, appelé dans ce cas inter-cumulant d'ordre 2 des signaux a et b, représente la fonction d'intercorrélation des signaux a et b.

Dans un mode particulier de réalisation du procédé de la présente invention, on choisit comme cumulant pour les signaux microphoniques et les signaux de haut-parleur l'auto-cumulant d'ordre 2, c'est-à-dire l'énergie de ces signaux. On note $x_i(n)$ le signal capté par le $i^{ème}$ microphone d'une salle donnée, i étant un entier compris entre 1 et N, et n désignant le rang temporel des échantillons. On note $z_j(n)$ le signal émis par le $j^{ème}$ haut-parleur d'une salle donnée, j étant un entier compris entre 1 et M. On note $Cum_2(x_i(n))$ et $Cum_2(z_j(n))$ les énergies respectives des signaux microphoniques et de haut-parleur.

Cette première étape est indiquée par le chiffre de référence 1000 sur la figure 2.

Dans une variante non détaillée ici, on peut choisir comme cumulants des inter-cumulants d'ordre 2, c'est-à-dire des fonctions d'intercorrélation des signaux microphoniques et de haut-parleur.

Puis, comme indiqué en 1001 sur la figure 2, à partir de ces grandeurs statistiques, on calcule pour chaque signal microphonique de la salle locale une première atténuation $G_{mic}(i,n)$ permettant de réduire l'écho en fonction des signaux de haut-parleurs de la salle locale.

Dans le mode particulier de réalisation mentionné précédemment, où les cumulants choisis sont les énergies, on calcule la première atténuation $G_{mic}(i,n)$ à partir de la formule suivante :

$$G_{mic}(i,n) = \frac{Cum_2(x_i(n))}{C. \sum_{j=1}^{M} Cum_2(z_j(n))} \qquad (1)$$

où C est une constante réelle strictement supérieure à 1. En présence de signaux de haut-parleurs, cette constante permet d'atténuer plus rapidement les signaux microphoniques, ce qui permet de réduire l'écho plus rapidement. Le choix de C est lié en particulier à des caractéristiques acoustiques de la salle et des transducteurs utilisés. A titre d'exemple non limitatif et dans un contexte acoustique particulier, on peut choisir C = 8.

On peut calculer les cumulants ainsi que la première atténuation $G_{mic}(i,n)$ soit à chaque échantillon, soit à une cadence inférieure à la fréquence d'échantillonnage, soit par trame de plusieurs échantillons, à titre d'exemples non limitatifs. Dans ce dernier cas, on peut par exemple calculer une valeur moyenne des cumulants et de la première atténuation sur une trame donnée et attribuer cette valeur moyenne à chaque échantillon de cette trame.

Cependant, on n'applique pas la première atténuation $G_{mic}(i,n)$ en l'état au signal microphonique correspondant $x_i(n)$.

Pour éviter une saturation des signaux microphoniques, on modifie la première atténuation $G_{mic}(i,n)$ de façon qu'elle ait une valeur maximale égale à 1 et qu'elle ait comme valeur minimale l'atténuation souhaitée, qui dépend du niveau de l'écho acoustique.

Comme indiqué en 1002 sur la figure 2, on obtient ainsi pour chaque signal microphonique de la salle locale une atténuation modifiée appelée deuxième atténuation, notée $G'_{mic}(i,n)$ et définie par :

$$G'_{mic}(i,n) = S_1(G_{mic}(i,n)) \qquad (2)$$

où $S_1(G_{mic}(i,n)) = s$ si $G_{mic}(i,n) \leq s$,
$S_1(G_{mic}(i,n)) = G_{mic}(i,n)$ si $s < G_{mic}(i,n) < 1$ et
$S_1(G_{mic}(i,n)) = 1$ si $G_{mic}(i,n) \geq 1$.

Le seuil minimal s est l'atténuation souhaitée précitée. Dans l'exemple précité où C = 8, pour une fonction de transfert entre haut-parleurs et microphones ayant une valeur moyenne de -20 dB sur l'ensemble du domaine des fréquences mises en oeuvre, un seuil minimal avantageux est s = 0,1, ce qui correspond, en dB, à $20 \log_{10}s$ = -20 dB, où $\log_{10}$ désigne le logarithme décimal.

Cependant, on n'applique pas non plus la deuxième atténuation $G'_{mic}(i,n)$ en l'état au signal microphonique correspondant $x_i(n)$. Sinon, dans le cas de la double parole, c'est-à-dire en présence de parole locale et distante simultanées, le signal de parole local subirait la même atténuation que l'écho, ce qui limiterait l'interactivité. On effectue pour cela un ajustement supplémentaire des atténuations à appliquer aux signaux microphoniques.

A partir du rapport de cumulants (1) calculé précédemment, on détermine, microphone par microphone, pour tout entier i compris entre 1 et N, si le signal microphonique $x_i(n)$ est un signal d'écho seul ou un signal de parole locale seule, suivant un premier cas, ou si $x_i(n)$ est un signal de double parole, suivant un second cas.

Dans un mode particulier de réalisation, si la première atténuation $G_{mic}(i,n)$ a une valeur très inférieure à 1, cela signifie qu'on est en présence d'un signal d'écho seul, étant donné qu'on a supposé que le couplage entre haut-parleurs et microphones est négatif. Si $G_{mic}(i,n)$ est très supérieur à 1, on est en présence d'un signal de parole locale seule. Si $G_{mic}(i,n)$ a une valeur intermédiaire, on est en présence de double parole.

Cette détermination du type de chaque signal microphonique peut être effectuée à l'aide de toute autre méthode jugée appropriée.

En fonction de la détermination du type de chaque signal microphonique $x_i(n)$, on calcule une troisième atténuation $G''_{mic}(i,n)$, comme indiqué en 1003 sur la figure 2, à partir de la deuxième atténuation $G'_{mic}(i,n)$, comme suit. Dans le premier cas précité, où le signal microphonique $x_i(n)$ est un signal d'écho seul ou un signal de parole locale seule, la troisième atténuation est $G''_{mic}(i,n) = G'_{mic}(i,n)$. Dans le second cas précité, où le signal microphonique $x_i(n)$ est un signal de double parole, on "relâche" l'atténuation, c'est-à-dire que dans le calcul de la deuxième atténuation $G'_{mic}(i,n)$, on remplace la valeur initiale du seuil minimal s par une valeur plus élevée, dans une proportion telle que l'écho soit perceptible, mais non gênant. Dans l'exemple précité où C = 8 et s = 0,1, on peut par exemple choisir d'augmenter le seuil s lorsque le rapport de cumulants (1) est supérieur à -12 dB ; on peut choisir de le faire passer à s = 0,7, soit environ -3 dB. Ce relâchement de l'atténuation, effectué uniquement pour les microphones qui captent un signal de parole locale, contribue notamment à préserver l'interactivité.

Les étapes décrites précédemment concernent des opérations effectuées séparément pour chaque microphone de la salle locale. Afin de prendre en compte dans chacune de ces opérations la présence des autres microphones de la salle locale, on calcule pour chaque signal microphonique $x_i(n)$ une atténuation additionnelle, appelée quatrième atténuation et notée $\Gamma(i,n)$, comme indiqué en 1004 sur la figure 2.

La quatrième atténuation $\Gamma(i,n)$ tient compte des signaux microphoniques $x_q(n)$, où q est un entier différent de i et compris entre 1 et N. Elle est calculée à partir d'un rapport entre des cumulants de signaux microphoniques. Dans un mode particulier de réalisation, on choisit comme cumulant pour les signaux microphoniques $x_i(n)$ l'auto-cumulant d'ordre 2, c'est-à-dire l'énergie de ces signaux, et on calcule la quatrième atténuation $\Gamma(i,n)$ pour chaque signal microphonique $x_i(n)$ à partir de la formule suivante :

$$\Gamma(i,n) = \frac{(Cum_2(x_i(n)))^{N-1}}{\displaystyle\prod_{\substack{q=1 \\ q \neq i}}^{N} Cum_2(x_q(n))} \tag{3}$$

Comme on l'a indiqué plus haut, on peut estimer les auto-cumulants des signaux microphoniques, d'une part, soit en large bande, soit sur certaines bandes de fréquence, et d'autre part, soit à chaque échantillon, soit à une cadence inférieure à la fréquence d'échantillonnage, soit par trame de plusieurs échantillons.

Dans le rapport de cumulants (3), il est particulièrement avantageux d'utiliser au dénominateur le produit des cumulants des signaux microphoniques autres que le $i^{ème}$ signal microphonique. Néanmoins, en variante, on peut utiliser la somme des mêmes cumulants.

Cependant, on n'applique pas la quatrième atténuation $\Gamma(i,n)$ en l'état au signal microphonique correspondant $x_i(n)$.

Pour éviter une saturation des signaux microphoniques, on modifie la quatrième atténuation $\Gamma(i,n)$ suivant une étape analogue à l'étape de modification de la première atténuation $G_{mic}(i,n)$, décrite plus haut.

Comme indiqué en 1005 sur la figure 2, on obtient ainsi pour chaque signal microphonique de la salle locale une cinquième atténuation $\Gamma'(i,n)$, définie par :

$$\Gamma'(i,n) = S_2(\Gamma(i,n)) \tag{4}$$

où $S_2(\Gamma(i,n)) = s'$ si $\Gamma(i,n) \leq s'$,
$S_2(\Gamma(i,n)) = \Gamma(i,n)$ si $s' < \Gamma(i,n) < 1$ et
$S_2(\Gamma(i,n)) = 1$ si $\Gamma(i,n) \geq 1$.

Le seuil minimal s' est l'atténuation souhaitée, qui dépend principalement du niveau de diaphonie perceptible, et dans une moindre mesure, du niveau d'écho. La diaphonie est ici caractérisée par des interférences perceptibles dans le signal microphonique $x_i(n)$, entre la parole qui provient du locuteur s'exprimant devant le $i^{ème}$ microphone de la salle locale et la parole qui provient de locuteurs s'exprimant devant les autres microphones de la salle locale et qui est également captée par le $i^{ème}$ microphone.

Dans l'exemple précité où C = 8 et s = 0,1 (ou s = 0,7 en cas de double parole), un seuil s' avantageux est s' = 0,125, soit environ -18 dB.

On calcule ensuite le produit des troisième et cinquième atténuations $G''_{mic}(i,n)$ et $\Gamma'(i,n)$ obtenues précédemment, de façon à obtenir pour chaque signal microphonique $x_i(n)$ une atténuation globale $G^*_{mic}(i,n)$ définie par :

$$G^*_{mic}(i,n) = G''_{mic}(i,n).\Gamma'(i,n).$$

On modifie cette atténuation globale de façon à obtenir pour chaque signal microphonique $x_i(n)$, comme indiqué en 1006 sur la figure 2, un coefficient de pondération $\beta_i(n)$ défini comme suit :

$$\beta_i(n) = S_4(G^*_{mic}(i,n)) \tag{5}$$

où $S_4(G^*_{mic}(i,n)) = s''$ si $G^*_{mic}(i,n) \leq s''$ et
$S_4(G^*_{mic}(i,n)) = G^*_{mic}(i,n)$ si $s'' < G^*_{mic}(i,n) \leq 1$,
s'' étant un seuil minimal prédéterminé strictement inférieur à 1.

Dans l'exemple précité où C = 8, s = 0, 1 (ou s = 0, 7 en cas de double parole) et s' = 0,125, un seuil s'' avantageux est s'' = 0,1.

On applique à chaque signal microphonique $x_i(n)$ le coefficient de pondération $\beta_i(n)$ correspondant.

En variante aux étapes 1005 et 1006, on peut tout d'abord calculer l'atténuation $\Gamma''(i,n)$ puis l'appliquer au signal microphonique correspondant $x_i(n)$, de façon à obtenir un signal microphonique atténué ; on calcule ensuite l'atténuation $G''_{mic}(i,n)$ et on l'applique au signal microphonique atténué.

On suppose que P canaux sont prévus pour la transmission numérique entre la salle locale et la ou les salles distantes.

Dans le mode particulier de réalisation décrit, l'étape suivante du procédé de la présente invention consiste à transmettre sur chaque canal de transmission un signal $y_k(n)$, k étant un entier compris entre 1 et P, comme indiqué en 1007 sur la figure 2, sous forme d'une combinaison linéaire des signaux microphoniques $x_i(n)$ pondérés, définie comme suit :

$$y_k(n) = \sum_{i=1}^{N} \alpha_{k,i}(n) . \beta_i(n) . x_i(n) \qquad\qquad (6)$$

où $\alpha_{k,i}(n)$ désigne des coefficients de codage réels prédéterminés et $\beta_i(n)$ désigne les coefficients de pondération obtenus précédemment.

Les coefficients $\beta_i(n)$ varient au cours du temps et contribuent notamment à réduire l'écho tout en préservant l'interactivité. Ils permettent en outre de privilégier le ou les microphone(s) actif (s) et de favoriser la spatialisation du son.

Les coefficients $\alpha_{k,i}(n)$, $1 \leq k \leq P$, $1 \leq i \leq N$, forment une matrice de codage à P lignes et N colonnes. Le coefficient situé à l'intersection de la $k_0^{ème}$ ligne et de la $i_0^{ème}$ colonne, noté $\alpha_{k0,i0}(n)$, où $k_0$ est un entier compris entre 1 et P et $i_0$ est un entier compris entre 1 et N, représente la contribution du $i_0^{ème}$ microphone au $k_0^{ème}$ canal de transmission.

Ainsi, chaque ligne de la matrice de codage fournit les contributions des N microphones à un canal de transmission donné, et chaque colonne fournit les contributions d'un microphone donné aux différents canaux de transmission. La somme des coefficients de chaque colonne vaut 1.

Ces contributions, c'est-à-dire les coefficients $\alpha_{k,i}(n)$, sont inférieures ou égales à 1 et sont choisies de façon appropriée selon le contexte acoustique et vidéo. Les coefficients $\alpha_{k,i}(n)$ dépendent notamment de la configuration du réseau de salles de visioconférence. Par exemple, ils diffèrent selon que la configuration est du type point à point ou multipoint (ces notions ont été définies en introduction). Les coefficients $\alpha_{k,i}(n)$ dépendent également de la prise de vue effectuée dans les salles de visioconférence du réseau, de façon à assurer la concordance entre les signaux sonores et les images fournies par les écrans des différentes salles.

Chaque microphone est généralement associé à une région de la salle locale. Chaque canal transmet généralement les contributions de microphones voisins d'une même région.

A titre d'exemple non limitatif, dans le cas où N = 6 (six microphones) et P = 2 (deux canaux de transmission), la matrice de codage peut être choisie comme suit :

| 1 | 1 | 1/2 | 1/2 | 0 | 0 |
|---|---|-----|-----|---|---|
| 0 | 0 | 1/2 | 1/2 | 1 | 1 |

On a choisi dans cet exemple d'associer les premier et deuxième microphones à une région "gauche", les deuxième et troisième microphones à une région "centre" et les cinquième et sixième microphones à une région "droite", en fonction de leur emplacement dans la salle.

Les signaux des premier et deuxième microphones sont transmis sur le premier canal ($\alpha_{1.1} = \alpha_{1.2} = 1$). Les signaux des cinquième et sixième microphones sont transmis sur le deuxième canal ($\alpha_{2.5} = \alpha_{2.6} = 1$). Les signaux des troisième et quatrième microphones sont transmis à 50 % sur le premier canal et à 50 % sur le deuxième canal ($\alpha_{1.3} = \alpha_{1.4} = \alpha_{2.3} = \alpha_{2.4} = 1/2$). Les contributions des cinquième et sixième microphones au premier canal sont considérées comme négligeables, étant donné l'emplacement sensiblement éloigné de ces microphones par rapport à la région "gauche" ($\alpha_{1.5} = \alpha_{1.6} = 0$). De même, les contributions des premier et deuxième microphones au deuxième canal sont considérées comme négligeables, étant donné l'emplacement sensiblement éloigné de ces microphones par rapport à la région "gauche" ($\alpha_{2.1} = \alpha_{2.2} = 0$).

On considère dans ce qui suit la réception dans une salle distante donnée.

L'étape suivante du procédé consiste à calculer, pour chaque signal de haut-parleur $z_j(n)$ de cette salle distante, une sixième atténuation $G_{HP}(j,n)$, comme indiqué en 1008 sur la figure 2, à partir de cumulants calculés pour chaque signal $y_k(n)$ transmis en provenance de la salle locale considérée précédemment.

Dans un mode particulier de réalisation, la sixième atténuation $G_{HP}(j,n)$ est issue d'un rapport entre des auto-cumulants d'ordre 2 (énergies) et des inter-cumulants d'ordre 2 (fonctions d'intercorrélation) des signaux transmis $y_k(n)$. De même que pour les cumulants mentionnés plus haut, le calcul peut être effectué par bande de fréquence ou en large bande.

De même que pour les atténuations calculées à l'émission, on applique à la sixième atténuation $G_{HP}(j,n)$ un seuil minimal, noté s* et strictement inférieur à 1, et un seuil maximal de 1, de façon que cette atténuation ait pour valeur maximale 1 et pour valeur minimale l'atténuation souhaitée en fonction de la diaphonie et de l'écho.

Comme indiqué en 1009 sur la figure 2, on obtient ainsi un coefficient de pondération $\lambda_j(n)$ défini comme suit :

$$\lambda_j(n) = S_3(G_{HP}(j,n)) \tag{7}$$

où $S_3(G_{HP}(j,n)) = s^*$ si $G_{HP}(j,n) \leq s^*$,
$S_3(G_{HP}(j,n)) = G_{HP}(j,n)$ si $s^* < G_{HP}(j,n) < 1$ et
$S_3(G_{HP}(j,n)) = 1$ si $G_{HP}(j,n) \geq 1$.

A titre d'exemple non limitatif, dans le cas où P = 2 (deux canaux de transmission) et M = 3 (trois haut-parleurs), les coefficients de pondération peuvent être obtenus comme suit :

$$\lambda_2(n) = S_3(G_{HP}(2,n)), \text{ où}$$

$$G_{HP}(2,n) = \frac{2.Cum_2(y_1(n)).Cum_2(y_2(n))}{Cum_2(y_1(n))^2 + Cum_2)y_2(n))^2}$$

où $Cum_2(y_1(n))$ est un auto-cumulant d'ordre 2 qui représente l'énergie du signal transmis $y_1(n)$, et
où $Cum_2(y_2(n))$ est un auto-cumulant d'ordre 2 qui représente l'énergie du signal transmis $y_2(n)$.

Dans le même exemple, on peut choisir $\lambda_1(n) = \lambda_3(n) = 1 + s^* - \lambda_2(n)$.

Ces expressions se généralisent aisément à un nombre plus élevé de canaux de transmission et de haut-parleurs.

Dans l'exemple précité où C = 8, s = 0,1 (ou s = 0,7 en cas de double parole) et s' = 0,125, un seuil s* avantageux est s* = s' = 0,125, soit environ -18 dB.

Comme indiqué en 1010 sur la figure 2, on détermine ensuite chaque signal de haut-parleur $z_j(n)$ de la salle distante, à partir d'une combinaison linéaire des signaux transmis $y_k(n)$ pondérés, définie comme suit :

$$z_j(n) = \lambda_j(n).\sum_{k=1}^{P} \gamma_{j.k}(n).y_k(n) \tag{8}$$

où $\gamma_{j,k}(n)$ désigne des coefficients de décodage réels prédéterminés et $\lambda_j(n)$ désigne les coefficients de pondération obtenus précédemment.

Les coefficients $\lambda_j(n)$ varient au cours du temps et contribuent notamment à améliorer la restitution du relief sonore et à réduire la diaphonie éventuelle, en particulier en cas de transmission sur un nombre P de canaux inférieur au nombre M de haut-parleurs. Ils contribuent également à réduire l'écho acoustique en limitant le nombre de haut-parleurs actifs à tout moment.

Les coefficients $\gamma_{j,k}(n)$, $1 \leq j \leq M$, $1 \leq k \leq P$, forment une matrice de décodage à P lignes et M colonnes. Ils dépendent notamment de la disposition des haut-parleurs et du mode d'affichage des images dans les salles de visioconférence du réseau. A la différence des coefficients de codage $\alpha_{k,i}(n)$, les coefficients $\gamma_{j,k}(n)$ sont indépendants de la configuration point à point ou multipoint du réseau.

L'étape suivante du procédé consiste à émettre, au moyen du j$^{\text{ème}}$ haut-parleur de la salle distante, pour tout entier j compris entre 1 et M, le signal de haut-parleur $z_j(n)$ obtenu à partir de la formule (8).

Dans un mode particulier de réalisation, on transmet en outre sur les P canaux de transmission les produits $\gamma_{j,k}(n).\lambda_j(n)$, $1 \leq j \leq M$, $1 \leq k \leq P$, à la même cadence que les signaux sonores. Ainsi, chaque canal de transmission transporte, en plus du signal $y_k(n)$, les pondérations dont ce signal doit être affecté avant émission par le haut-parleur correspondant de la salle distante. Cela revient à effectuer une détection d'activité vocale et à transmettre l'information correspondante.

Dans ce mode de réalisation, on adapte la matrice de codage en fonction des locuteurs actifs et on calcule la matrice de décodage à l'émission, à partir de la matrice de codage et des caractéristiques de restitution sonore.

Lorsque le nombre de microphones actifs, tel que déduit de la valeur de la cinquième atténuation $\Gamma''(i,n)$ ou de la troisième atténuation $G''_{mic}(i,n)$, est inférieur ou égal au nombre de canaux de transmission, chaque signal issu d'un microphone actif est aiguillé vers un des canaux. La matrice de codage est alors constituée uniquement de 1 et de 0 (les 1 correspondant aux microphones actifs).

Dans ce mode de réalisation, la matrice de décodage est la transposée de la matrice de codage.

On peut transmettre les M x P coefficients $\gamma_{j,k}(n)$ au moyen d'un faible nombre de bits. A titre d'exemple non limitatif, trois bits par coefficient peuvent suffire. On peut par exemple effectuer un codage de type logarithmique où chaque coefficient, exprimé en dB, est quantifié de façon uniforme sur un nombre de niveaux donné. A titre d'exemple non limitatif, on peut prévoir huit niveaux.

Dans un mode particulier de réalisation, on diffuse en outre, dans la salle locale, les signaux à transmettre $y_k(n)$, au moyen des haut-parleurs locaux, en plus des signaux reçus en provenance de la ou des salle(s) distante(s) et à un niveau plus faible que les signaux reçus. Cette diffusion d'un retour local amène les locuteurs à parler moins fort ou plus loin du microphone, au cas où ils parlaient initialement à un niveau très élevé ou trop près du microphone sans s'en rendre compte. Cette diffusion contribue également à créer un environnement acoustique commun dans une salle donnée, ce qui est particulièrement avantageux pour des locuteurs situés à des emplacements éloignés d'une même salle.

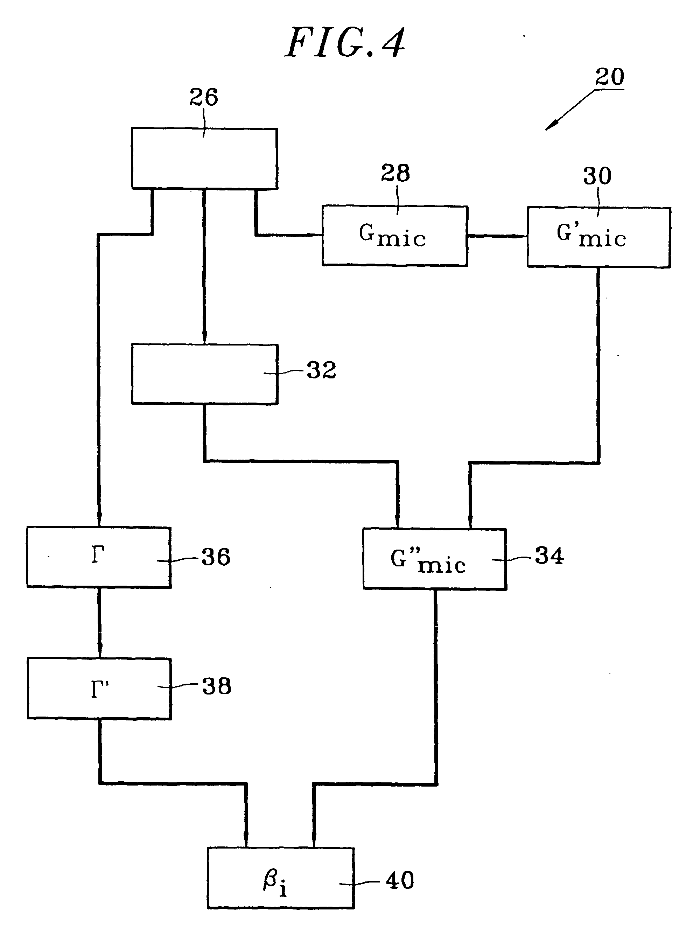

On décrit dans ce qui suit le dispositif de la présente invention, dans un mode particulier de réalisation, à l'aide de la figure 3.

Ce dispositif s'applique à un système de transmission numérique de signaux sonores du même type que celui considéré en relation avec le procédé, à savoir, un système mettant en oeuvre P canaux de transmission entre une salle locale et au moins une salle distante, qui comportent chacune N microphones et M haut-parleurs, les valeurs de N et M pouvant différer selon les salles.

Comme le montre la figure 3, le dispositif comprend un module 20 de codage des signaux sonores. Le module 20 reçoit en entrée N signaux numériques $x_i(n)$ qui proviennent respectivement des N microphones de la salle locale. Il fournit en sortie P signaux numériques $y_k(n)$ définis par la formule (6) donnée plus haut.

Les P signaux $y_k(n)$ sont transmis respectivement sur les P canaux de transmission dans le réseau 22.

Le dispositif comprend également un module 24 de décodage des signaux sonores. Le module 24 reçoit en entrée les P signaux $y_k(n)$ et fournit en sortie M signaux numériques $z_j(n)$, définis par la formule (8) donnée plus haut, à émettre respectivement par les M haut-parleurs de chaque salle.

Dans le mode particulier de réalisation représenté sur la figure 4, le module 20 de codage des signaux sonores comprend un module 26 pour calculer un cumulant pour chaque signal microphonique $x_i(n)$ de la salle locale et un cumulant pour chaque signal de haut-parleur $z_j(n)$ de la salle locale.

Le module 20 comprend également un module 28, connecté en sortie du module 26, pour calculer la première atténuation $G_{mic}(i,n)$, décrite plus haut, pour chaque signal microphonique $x_i(n)$ de la salle locale, à partir d'un rapport entre des cumulants fournis par le module 26 de calcul de cumulants. Dans un mode particulier de réalisation, le module 28 fournit en sortie des valeurs de $G_{mic}(i,n)$ telles que définies par la formule (1) donnée plus haut.

Un module 30 pour modifier chaque première atténuation $G_{mic}(i,n)$ est connecté en sortie du module 28. Il fournit en sortie la deuxième atténuation $G'_{mic}(i,n)$ définie par la formule (2) donnée plus haut.

Le module 20 comprend de plus un module 32, connecté en sortie du module 26 de calcul de cumulants, pour déterminer, pour chaque signal microphonique $x_i(n)$, à partir des cumulants de signaux microphoniques et de haut-parleurs fournis par le module 26,

si ce signal microphonique est un signal d'écho seul ou un signal provenant uniquement de la salle locale, suivant un premier cas, ou

si ce signal microphonique présente des composantes provenant de la salle locale et d'autres composantes provenant de la salle distante, suivant un second cas, comme on l'a décrit plus haut.

Un module 34 pour calculer la troisième atténuation $G''_{mic}(i,n)$ définie plus haut est connecté en sortie des modules 30 et 32.

Le module 20 comprend en outre un module 36, connecté en sortie du module 26 de calcul de cumulants, pour calculer la quatrième atténuation $\Gamma(i,n)$ à partir d'un rapport entre des cumulants de signaux microphoniques. Dans un mode particulier de réalisation, le module 36 fournit en sortie des valeurs de $\Gamma(i,n)$ telles que définies par la formule (3) donnée plus haut.

Un module 38 pour modifier chaque quatrième atténuation $\Gamma(i,n)$ est connecté en sortie du module 36. Il fournit en sortie la cinquième atténuation $\Gamma'(i,n)$ définie par la formule (4) donnée plus haut.

Un module 40 pour calculer et modifier le produit des troisième et cinquième atténuations $G''_{mic}(i,n)$ et $\Gamma'(i,n)$ est connecté en sortie des modules 34 et 38. Le module 40 fournit en sortie les coefficients de pondération $\beta_i(n)$ définis par la formule (5) donnée plus haut.

Dans le mode particulier de réalisation représenté sur la figure 5, le module 24 de décodage des signaux sonores comprend un module 42 pour calculer, pour chaque signal de haut-parleur $z_j(n)$ de la salle distante considérée, la sixième atténuation $G_{HP}(j,n)$ définie plus haut, à partir de cumulants calculés pour chaque signal transmis $y_k(n)$. Ces cumulants peuvent être fournis par le module 26 de calcul de cumulants représenté sur la figure 4.

Un module 44 pour modifier chaque sixième atténuation $G_{HP}(j,n)$ est connecté en sortie du module 42. Il fournit en sortie les coefficients de pondération $\lambda_j(n)$ définis par la formule (7) donnée plus haut.

## Revendications

1. Procédé de réduction d'écho acoustique et de spatialisation sonore, dans un système de transmission numérique de signaux sonores sur P canaux de transmission, entre un site local et au moins un site distant, comportant chacun N microphones et M haut-parleurs, N, M, P étant des entiers, les valeurs de N et M pouvant différer selon les sites, suivant lequel :

   a) on calcule un cumulant pour chaque signal microphonique $x_i(n)$ du site local, i étant un entier compris entre 1 et N et n désignant le rang temporel des échantillons, et on calcule un cumulant pour chaque signal de haut-parleur $z_j(n)$ du site local, j étant un entier compris entre 1 et M ;
   puis, pour tout i, $1 \leq i \leq N$,
   b) on calcule une première atténuation $G_{mic}(i,n)$ pour le signal microphonique $x_i(n)$ du site local à partir d'un rapport entre des cumulants obtenus précédemment ;
   c) on modifie la première atténuation $G_{mic}(i,n)$ de façon à obtenir une deuxième atténuation $G'_{mic}(i,n)$ définie comme suit :

$$G'_{mic}(i,n) = S_1(G_{mic}(i,n))$$

   où $S_1(G_{mic}(i,n)) = s$ si $G_{mic}(i,n) \leq s$,
   $S_1(G_{mic}(i,n)) = G_{mic}(i,n)$ si $s < G_{mic}(i,n) < 1$ et
   $S_1(G_{mic}(i,n)) = 1$ si $G_{mic}(i,n) \geq 1$,
   s étant un seuil minimal prédéterminé strictement inférieur à 1 ;
   d) à partir des cumulants de signaux microphoniques et de haut-parleurs calculés précédemment, on détermine
      si le signal microphonique $x_i(n)$ est un signal d'écho seul ou un signal provenant uniquement du site local, suivant un premier cas, ou
      si le signal microphonique $x_i(n)$ présente des composantes provenant du site local et d'autres composantes provenant du site distant, suivant un second cas ;
   e) on calcule une troisième atténuation $G''_{mic}(i,n)$, qui dans ledit premier cas, est égale à la deuxième atténuation $G'_{mic}(i,n)$ et dans ledit second cas, est égale à la deuxième atténuation $G'_{mic}(i,n)$ dans le calcul de laquelle on augmente le seuil minimal s d'une valeur prédéterminée ;
   f) on calcule une quatrième atténuation $\Gamma(i,n)$ à partir d'un rapport entre des cumulants de signaux microphoniques ;
   g) on modifie la quatrième atténuation $\Gamma(i,n)$ de façon à obtenir une cinquième atténuation $\Gamma'(i,n)$ définie comme suit :

$$\Gamma'(i,n) = S_2(\Gamma(i,n))$$

   où $S_2(\Gamma(i,n)) = s'$ si $\Gamma(i,n) \leq s'$,
   $S_2(\Gamma(i,n)) = \Gamma(i,n)$ si $s' < \Gamma(i,n) < 1$ et

$S_2(\Gamma(i,n)) = 1$ si $\Gamma(i,n) \geq 1$,
s' étant un seuil minimal prédéterminé strictement inférieur à 1 ;
h) on calcule le produit des troisième et cinquième atténuations $G''_{mic}(i,n)$ et $\Gamma'(i,n)$ obtenues précédemment, de façon à obtenir une atténuation globale $G^*_{mic}(i,n)$ définie par :

$$G^*_{mic}(i,n) = G''_{mic}(i,n).\Gamma'(i,n) ;$$

i) on modifie l'atténuation globale $G^*_{mic}(i,n)$ de façon à obtenir un coefficient de pondération $\beta_i(n)$ défini comme suit :

$$\beta_i(n) = S_4(G^*_{mic}(i,n))$$

où $S_4(G^*_{mic}(i,n)) = s''$ si $G^*_{mic}(i,n) \leq s''$ et
$S_4(G^*_{mic}(i,n)) = G^*_{mic}(i,n)$ si $s'' < G^*_{mic}(i,n) \leq 1$,
s'' étant un seuil minimal prédéterminé strictement inférieur à 1 ;
j) on transmet sur chaque canal de transmission un signal $y_k(n)$, k étant un entier compris entre 1 et P, sous forme d'une combinaison linéaire des signaux microphoniques $x_i(n)$ pondérés, définie comme suit :

$$y_k(n) = \sum_{i=1}^{N} \alpha_{k.i}(n).\beta_i(n).x_i(n)$$

où $\alpha_{k,i}(n)$ désigne des coefficients de codage réels prédéterminés et $\beta_i(n)$ désigne les coefficients de pondération obtenus précédemment ;
puis, pour tout entier j, $1 \leq j \leq M$ :
k) on calcule, pour le signal de haut-parleur $z_j(n)$ du site distant, une sixième atténuation $G_{HP}(j,n)$ à partir de cumulants calculés pour chaque signal $y_k(n)$ transmis en provenance du site local ;
$\ell$) on modifie la sixième atténuation $G_{HP}(j,n)$ de façon à obtenir un coefficient de pondération $\lambda_j(n)$ défini comme suit :

$$\lambda_j(n) = S_3(G_{HP}(j,n))$$

où $S_3(G_{HP}(j,n)) = s^*$ si $G_{HP}(j,n) \leq s^*$,
$S_3(G_{HP}(j,n)) = G_{HP}(j,n)$ si $s^* < G_{HP}(j,n) < 1$ et
$S_3(G_{HP}(j,n)) = 1$ si $G_{HP}(j,n) \geq 1$,
s* étant un seuil minimal prédéterminé strictement inférieur à 1 ;
m) on détermine le signal de haut-parleur $z_j(n)$ du site distant à partir d'une combinaison linéaire des signaux transmis $y_k(n)$ pondérés, définie comme suit :

$$z_j(n) = \lambda_j(n).\sum_{k=1}^{P} \gamma_{j.k}(n).y_k(n)$$

où $\gamma_{j,k}(n)$ désigne des coefficients de décodage réels prédéterminés, et où $\lambda_j(n)$ désigne les coefficients de pondération obtenus précédemment ; et
n) on émet sur le j[ème] haut-parleur du site distant le signal de haut-parleur $z_j(n)$ ainsi obtenu.

**2.** Procédé selon la revendication 1, suivant lequel, à l'étape a), on choisit comme cumulant pour les signaux microphoniques $x_i(n)$ et les signaux de haut-parleur $z_j(n)$ l'énergie de ces signaux, et à l'étape (b), on calcule la première atténuation $G_{mic}(i,n)$ pour chaque signal microphonique $x_i(n)$ à partir de la formule suivante :

$$G_{mic}(i,n) = \frac{Cum_2(x_i(n))}{C. \displaystyle\sum_{j=1}^{M} Cum_2(z_j(n))}$$

où $Cum_2(.)$ désigne l'énergie et où C est une constante réelle prédéterminée strictement supérieure à 1.

3. Procédé selon la revendication 1, suivant lequel, à l'étape a), on choisit comme cumulant pour les signaux microphoniques $x_i(n)$ l'énergie de ces signaux, et à l'étape (f), on calcule la quatrième atténuation $\Gamma(i,n)$ pour chaque signal microphonique $x_i(n)$ à partir de la formulé suivante :

$$\Gamma(i,n) = \frac{(Cum_2(x_i(n)))^{N-1}}{\displaystyle\prod_{\substack{q=1 \\ q \neq i}}^{N} Cum_2(x_q(n))}$$

où $Cum_2(.)$ désigne l'énergie et où q est un entier.

4. Procédé selon la revendication 1, 2 ou 3, suivant lequel on transmet en outre sur les P canaux les produits $\gamma_{j,k}(n)$. $\lambda_j(n)$, $1 \leq j \leq M$, $1 \leq k \leq P$, à la même cadence que les signaux sonores.

5. Procédé selon l'une quelconque des revendications 1 à 4, suivant lequel on diffuse en outre sur le site local les signaux à transmettre $y_k(n)$, au moyen des haut-parleurs locaux, en plus des signaux reçus en provenance du site distant et à un niveau plus faible que ces derniers.

6. Dispositif de réduction d'écho acoustique et de spatialisation sonore, dans un système de transmission numérique de signaux sonores sur P canaux de transmission, entre un site local et au moins un site distant, comportant chacun N microphones et M haut-parleurs, N, M, P étant des entiers, les valeurs de N et M pouvant différer selon les sites, **caractérisé en ce qu'**il comprend :

des moyens (20) de codage des signaux sonores, recevant en entrée N signaux numériques $x_i(n)$ provenant respectivement des N microphones du site local, où i est un entier compris entre 1 et N, et n est un entier qui désigne le rang temporel des échantillons, lesdits moyens (20) de codage fournissant en sortie P signaux numériques $y_k(n)$, où k est un entier compris entre 1 et P, définis par la formule suivante :

$$y_k(n) = \sum_{i=1}^{N} \alpha_{k,i}(n).\beta_i(n).x_i(n)$$

où $\alpha_{k,i}(n)$ désigne des coefficients de codage réels prédéterminés, et
où $\beta_i(n)$ désigne des coefficients de pondération qui dépendent de cumulants des signaux reçus par les microphones du site local et de cumulants des signaux émis par les haut-parleurs du site local,
les P signaux $y_k(n)$ étant transmis respectivement sur les P canaux de transmission entre le site local et le site distant ; et
des moyens (24) de décodage des signaux sonores, recevant en entrée les P signaux $y_k(n)$ et fournissant en sortie M signaux numériques $z_j(n)$ à émettre respectivement par les M haut-parleurs de chaque site, où j est un entier compris entre 1 et M, définis par la formule suivante :

$$z_j(n) = \lambda_j(n).\sum_{k=1}^{P} \gamma_{j.k}(n).y_k(n)$$

où $\gamma_{j,k}(n)$ désigne des coefficients de décodage réels prédéterminés, et
où $\lambda_j(n)$ désigne des coefficients de pondération qui dépendent des signaux $y_k(n)$.

7. Dispositif selon la revendication 6, **caractérisé en ce que** lesdits moyens (20) de codage des signaux sonores comprennent :

des moyens (26) pour calculer un cumulant pour chaque signal microphonique $x_i(n)$ du site local et un cumulant pour chaque signal de haut-parleur $z_j(n)$ du site local ;
des moyens (28) pour calculer une première atténuation $G_{mic}(i,n)$ pour chaque signal microphonique $x_i(n)$ du site local à partir d'un rapport entre des cumulants fournis par lesdits moyens (26) de calcul de cumulants ;
des moyens (30) pour modifier chaque première atténuation $G_{mic}(i,n)$ de façon à obtenir, pour tout i, $1 \leq i \leq$ N, une deuxième atténuation $G'_{mic}(i,n)$ définie comme suit :

$$G'_{mic}(i,n) = S_1(G_{mic}(i,n))$$

où $S_1(G_{mic}(i,n)) = s$ si $G_{mic}(i,n) \leq s$,
$S_1(G_{mic}(i,n)) = G_{mic}(i,n)$ si $s < G_{mic}(i,n) < 1$ et
$S_1(G_{mic}(i,n)) = 1$ si $G_{mic}(i,n) \geq 1$,
s étant un seuil minimal prédéterminé strictement inférieur à 1 ;
des moyens (32) pour déterminer, pour chaque signal microphonique $x_i(n)$, à partir des cumulants de signaux microphoniques et de haut-parleurs fournis par lesdits moyens (26) de calcul de cumulants,
si ce signal microphonique $x_i(n)$ est un signal d'écho seul ou un signal provenant uniquement du site local, suivant un premier cas, ou
si ce signal microphonique $x_i(n)$ présente des composantes provenant du site local et d'autres composantes provenant du site distant, suivant un second cas ;
des moyens (34) pour calculer, pour tout i, $1 \leq i \leq$ N, une troisième atténuation $G''_{mic}(i,n)$, qui dans ledit premier cas, est égale à la deuxième atténuation $G'_{mic}(i,n)$ et dans ledit second cas, est égale à la deuxième atténuation $G'_{mic}(i,n)$ dans le calcul de laquelle on augmente le seuil minimal s d'une valeur prédéterminée ;
des moyens (36) pour calculer, pour tout i, $1 \leq i \leq$ N, une quatrième atténuation $\Gamma(i,n)$ à partir d'un rapport entre des cumulants de signaux microphoniques ;
des moyens (38) pour modifier chaque quatrième atténuation $\Gamma(i,n)$ de façon à obtenir une cinquième atténuation $\Gamma'(i,n)$ définie comme suit :

$$\Gamma'(i,n) = S_2(\Gamma(i,n))$$

où $S_2(\Gamma(i,n)) = s'$ si $\Gamma(i,n) \leq s'$,
$S_2(\Gamma(i,n)) = \Gamma(i,n)$ si $s' < \Gamma(i,n) < 1$ et
$S_2(\Gamma(i,n)) = 1$ si $\Gamma(i,n) \geq 1$,
s' étant un seuil minimal prédéterminé strictement inférieur à 1 ; et
des moyens (40) pour calculer et modifier, pour tout i, $1 \leq i \leq$ N, le produit des troisième et cinquième atténuations $G''_{mic}(i,n)$ et $\Gamma'(i,n)$ obtenues précédemment, de façon à obtenir lesdits coefficients de pondération $\beta_i(n)$, définis comme suit :

$$\beta_i(n) = S_4(G^*_{mic}(i,n))$$

où $G^*_{mic}(i,n) = G''_{mic}(i,n).\Gamma'(i,n)$,
où $S_4(G^*_{mic}(i,n)) = s''$ si $G^*_{mic}(i,n) \leq s''$ et
$S_4(G^*_{mic}(i,n)) = G^*_{mic}(i,n)$ si $s'' < G^*_{mic}(i,n) \leq 1$,
s" étant un seuil minimal prédéterminé strictement inférieur à 1.

**8.** Dispositif selon la revendication 6, **caractérisé en ce que** lesdits moyens (24) de décodage des signaux sonores comprennent :

des moyens (42) pour calculer, pour chaque signal de haut-parleur $z_j(n)$, une sixième atténuation $G_{HP}(j,n)$ à partir de cumulants calculés pour chaque signal $y_k(n)$ ; et
des moyens (44) pour modifier chaque sixième atténuation $G_{HP}(j,n)$ de façon à obtenir lesdits coefficients de pondération $\lambda_j(n)$, définis comme suit :

$$\lambda_j(n) = S_3(G_{HP}(j,n))$$

où $S_3(G_{HP}(j,n)) = s^*$ si $G_{HP}(j,n) \le s^*$,
$S_3(G_{HP}(j,n)) = G_{HP}(j,n)$ si $s^* < G_{HP}(j,n) < 1$ et
$S_3(G_{HP}(j,n)) = 1$ si $G_{HP}(j,n) \ge 1$,
$s^*$ étant un seuil minimal prédéterminé strictement inférieur à 1.

**9.** Dispositif selon la revendication 7, **caractérisé en ce que** lesdits moyens (28) pour calculer chaque première atténuation $G_{mic}(i,n)$ fournissent en sortie :

$$G_{mic}(i,n) = \frac{Cum_2(x_i(n))}{C. \sum_{j=1}^{M} Cum_2(z_j(n))}$$

où $Cum_2(.)$ désigne le cumulant qui représente l'énergie et
où C est une constante réelle prédéterminée strictement supérieure à 1.

**10.** Dispositif selon la revendication 7, **caractérisé en ce que** lesdits moyens (36) pour calculer chaque quatrième atténuation $\Gamma(i,n)$ fournissent en sortie :

$$\Gamma(i,n) = \frac{(Cum_2(x_i(n)))^{N-1}}{\prod_{\substack{q=1 \\ q \ne i}}^{N} Cum_2(x_q(n))}$$

où $Cum_2(.)$ désigne le cumulant qui représente l'énergie et
où q est un entier.

**Patentansprüche**

**1.** Verfahren zur Reduktion von akustischem Echo und von'Schall-Spatialisation in einem System zur digitalen Übertragung von SchallSignalen auf P Übertragungskanälen zwischen einem lokalen Standort und wenigstens einem entfernten Standort, wobei jeder N Mikrofone und M Lautsprecher umfasst, wobei N, M, P ganze Zahlen sind, und wobei die Werte von N und M gemäß den Standorten differieren können, wobei entsprechend dem Verfahren:

a) für jedes Mikrofonsignal $x_i(n)$ des lokalen Standortes eine Häufung berechnet wird, wobei i eine ganze Zahl zwischen 1 und N ist und wobei n den zeitlichen Rang von Stichproben bezeichnet, und für jedes Lautsprechersignal $z_j(n)$ des lokalen Standortes eine Häufung berechnet wird, wobei j eine ganze Zahl zwischen 1 und M ist;
anschließend für alle i, $1 \le i \le N$

b) eine erste Dämpfung $G_{mic}(i,n)$ für das Mikrofonsignal $x_i(n)$ des lokalen Standortes ausgehend von einer Beziehung zwischen den zuvor erhaltenen Häufungen berechnet wird;

c) die erste Dämpfung $G_{mic}(i,n)$ derart modifiziert wird, dass eine zweite Dämpfung $G'_{mic}(i,n)$ erhalten wird, welche wie folgt definiert ist:

$$G'_{mic}(i,n) = S_1(G_{mic}(i,n))$$

wobei $S_1(G_{mic}(i,n)) = s$ wenn $G_{mic}(i,n) \leq s$,
$S_1(G_{mic}(i,n)) = G_{mic}(i,n)$ wenn $s < G_{mic}(i,n) < 1$ und
$S_1(G_{mic}(i,n)) = 1$ wenn $G_{mic}(i,n) \geq 1$,
wobei s ein vorbestimmter minimaler Schwellwert ist, der ausschließlich kleiner als 1 ist;

d) ausgehend von den zuvor berechneten Dämpfungen von Mikrofon- und Lautsprechersignalen bestimmt wird,

ob das Mikrofonsignal $x_i(n)$ gemäß einem ersten Fall ein einzelnes Echosignal oder ein nur vom lokalen Standort stammendes Signal ist, oder

ob das Mikrofonsignal $x_i(n)$ gemäß einem zweiten Fall vom lokalen Standort stammende Komponenten und andere vom entfernten Standort stammende Komponenten aufweist;

e) eine dritte Dämpfung $G''_{mic}(i,n)$ berechnet wird, die im ersten Fall gleich der zweiten Dämpfung $G'_{mic}(i,n)$ ist und die im zweiten Fall gleich der zweiten Dämpfung $G'_{mic}(i,n)$ ist, bei deren Berechnung der minimale Schwellwert s um einen vorbestimmten Wert erhöht wird;

f) eine vierte Dämpfung $\Gamma(i,n)$ ausgehend von einer Beziehung zwischen den Häufungen von Mikrofonsignalen berechnet wird;

g) die vierte Dämpfung $\Gamma(i,n)$ derart modifiziert wird, dass eine fünfte Dämpfung $\Gamma'(i,n)$ erhalten wird, die wie folgt definiert ist:

$$\Gamma'(i,n) = S_2(\Gamma(i,n))$$

wobei $S_2(\Gamma(i,n)) = s'$ wenn $\Gamma(i,n) \leq s'$,
$S_2(\Gamma(i,n)) = \Gamma(i,n)$ wenn $s' < \Gamma(i,n) < 1$ und
$S_2(\Gamma(i,n)) = 1$ wenn $\Gamma(i,n) \geq 1$,
wobei s' ein vorbestimmter minimaler Schwellwert ist, der ausschließlich kleiner als 1 ist;

h) das Produkt der zuvor erhaltenen dritten und fünften Dämpfungen $G''_{mic}(i,n)$ und $\Gamma'(i,n)$ derart berechnet wird, dass eine globale Dämpfung $G^*_{mic}(i,n)$ erhalten wird, welche wie folgt definiert ist:

$$G^*_{mic}(i,n) = G''_{mic}(i,n) . \Gamma'(i,n) ;$$

i) die globale Dämpfung $G^*_{mic}(i,n)$ derart modifiziert wird, dass ein Gewichtungskoeffizient $\beta_i(n)$ erhalten wird, welcher wie folgt definiert ist:

$$\beta_i(n) = S_4(G^*_{mic}(i,n))$$

wobei $S_4(G^*_{mic}(i,n)) = s''$ wenn $G^*_{mic}(i,n) \leq s''$ und
$S_4(G^*_{mic}(i,n)) = G^*_{mic}(i,n)$ wenn $s'' < G^*_{mic}(i,n) \leq 1$,
wobei s'' ein vorbestimmter minimaler Schwellwert ist, der ausschließlich kleiner als 1 ist;

j) auf jedem Übertragungskanal wird ein Signal $y_k(n)$ übertragen in Form einer linearen Kombination der gewichteten Mikrofonsignale $x_i(n)$,
wobei k eine ganze Zahl zwischen 1 und P ist, wobei die lineare Kombination wie folgt definiert ist:

$$y_k(n) = \sum_{i=1}^{N} \alpha_{k,i}(n) . \beta_i(n) . x_i(n)$$

wobei $\alpha_{k,j}(n)$ vorbestimmte reale Kodierungskoeffizienten bezeichnet und $\beta_i(n)$ die zuvor bestimmten Gewichtungskoeffizienten bezeichnet; dann für alle ganzen Zahlen j, $1 \leq j \leq M$:

k) eine sechste Dämpfung $G_{HP}(j,n)$ ausgehend von Häufungen, die für jedes vom lokalen Standort stammende übertragene Signal berechnet werden, für das Lautsprechersignal $z_j(n)$ berechnet wird;

l) die sechste Dämpfung $G_{HP}(j,n)$ derart modifiziert wird, dass ein Gewichtungskoeffizient $\lambda_j(n)$ erhalten wird, welcher wie folgt definiert ist:

$$\lambda_j(n) = S_3(G_{HP}(j,n))$$

wobei $S_3(G_{HP}(j,n)) = s^*$ wenn $G_{HP}(j,n) \leq s^*$,
$S_3(G_{HP}(j,n)) = G_{HP}(j,n)$ wenn $s^* < G_{HP}(j,n) < 1$ und
$S_3(G_{HP}(j,n)) = 1$ wenn $G_{HP}(j,n) \geq 1$,
wobei $s^*$ ein vorbestimmter minimaler Schwellwert ist, der ausschließlich kleiner als 1 ist;

m) das Lautsprechersignal $z_j(n)$ des entfernten Standorts ausgehend von einer linearen Kombination der gewichteten übertragenen Signale $y_k(n)$ bestimmt wird, wobei die lineare Kombination wie folgt definiert ist:

$$z_j(n) = \lambda_j(n) \cdot \sum_{k=1}^{P} \gamma_{j,k}(n) \cdot y_k(n)$$

wobei $\gamma_{j,k}(n)$ vorbestimmte reale Dekodierungskoeffizienten bezeichnet und wobei $\lambda_j(n)$ die zuvor erhaltenen Gewichtungskoeffizienten bezeichnet; und

n) auf dem j-ten Lautsprecher des entfernten Standorts das so erhaltenen Lautsprechersignal $z_j(n)$ ausgegeben wird.

2. Verfahren nach Anspruch 1, bei dem im Schritt a) als Häufung für die Mikrofonsignale $x_i(n)$ und die Lautsprechersignale $z_j(n)$ die Energie dieser Signale ausgewählt wird und im Schritt b) die erste Dämpfung $G_{mic}(i,n)$ für jedes Mikrofonsignal $x_i(n)$ ausgehend von der folgenden Formel berechnet wird:

$$G_{mic}(i,n) = \frac{Cum_2(x_i(n))}{C \cdot \sum_{j=1}^{M} Cum_2(z_j(n))}$$

wobei $Cum_2(.)$ die Energie bezeichnet und wobei C eine vorbestimmte reale Konstante ist, die ausschließlich größer als 1 ist.

3. Verfahren nach Anspruch 1, bei dem im Schritt a) als Häufung für die Mikrofonsignale $x_i(n)$ die Energie dieser Signale ausgewählt wird und im Schritt f) die vierte Dämpfung $\Gamma(i,n)$ für jedes Mikrofonsignal $x_i(n)$ ausgehend von der folgenden Formel berechnet wird:

$$\Gamma(i,n) = \frac{(Cum_2(x_i(n)))^{N-1}}{\prod\limits_{\substack{q=1 \\ q \neq i}}^{N} Cum_2(x_q(n))}$$

wobei $Cum_2(.)$ die Energie bezeichnet und wobei q eine ganze Zahl ist.

4. Verfahren nach Anspruch 1, 2 oder 3, bei dem auf den P Kanälen ferner die Produkte $\gamma_{j,k}(n).\lambda_j(n)$, $1 \leq j \leq M$, $1 \leq k \leq P$, im gleichen Takt wie die Schallsignale übertragen werden.

5. Verfahren nach einem der Ansprüche 1 bis 4, bei dem ferner am lokalen Standort zu übertragende Signale $y_k(n)$ vermittels der lokalen Lautsprecher ausgesendet werden, und zwar zusätzlich zu den empfangenen Signalen, welche vom entfernten Standort stammen, und mit einem schwächeren Pegel als diese letzteren.

6. Vorrichtung zur Reduktion von akustischem Echo und von Schall-Spatialisation in einem System zur digitalen Übertragung von SchallSignalen auf P Übertragungskanälen zwischen einem lokalen Standort und wenigstens einem entfernten Standort, wobei jeder N Mikrofone und M Lautsprecher umfasst, wobei N, M, P ganze Zahlen sind, und wobei die Werte von N und M gemäß den Standorten differieren können, **dadurch gekennzeichnet, dass** sie umfasst:

Mittel (20) zur Kodierung von Schallsignalen, welche am Eingang N digitale Signale $x_i(n)$ empfangen, die von jeweils N Mikrofonen des lokalen Standorts stammen, wobei i eine ganze Zahl zwischen 1 und N ist und n eine ganze Zahl ist, die den zeitlichen Rang von Stichproben bezeichnet, wobei die Mittel (20) am Ausgang P digitale Signale $y_k(n)$ bereitstellen, wobei k eine ganze Zahl zwischen 1 und P ist, und die digitalen Signale durch die folgende Formel definiert sind:

$$y_k(n) = \sum_{i=1}^{N} \alpha_{k,i}(n).\beta_i(n).x_i(n)$$

wobei $\alpha_{k,i}(n)$ vorbestimmte reale Kodierungskoeefizienten bezeichnet und
wobei $\beta_i(n)$ Gewichtungskoeffizienten bezeichnet, welche von Häufungen der durch die Mikrofone des lokalen Standorts empfangenen Signalen und von Häufungen der durch die Lautsprecher des lokalen Standorts ausgegebenen Signalen abhängen,

wobei die P Signale $y_k(n)$ jeweils auf den P Übertragungskanälen zwischen dem lokalen und dem entfernten Standort übertragen werden; und
Mittel (24) zur Dekodierung von Schallsignalen, welche am Eingang die P Signale $y_k(n)$ empfangen und am Ausgang M digitale, jeweils durch die M Lautsprecher jedes Standorts auszusendende Signale $z_j(n)$ bereitstellen, wobei j eine ganze Zahl zwischen 1 und M ist, wobei die Signale nach folgender Formel definiert sind:

$$z_j(n) = \lambda_j(n).\sum_{k=1}^{P} \gamma_{j,k}(n).y_k(n)$$

wobei $\gamma_{j,k}(n)$ vorbestimmte reale Dekodierungskoeffizienten bezeichnet und

wobei $\lambda_j(n)$ Gewichtungskoeffizienten bezeichnet, die von den Signalen $y_k(n)$ abhängig sind.

7. Vorrichtung nach Anspruch 6, **dadurch gekennzeichnet, dass** die Mittel (20) zur Kodierung der Schallsignale umfassen:

Mittel (26) zur Berechnung einer Häufung für jedes Mikrofonsignal $x_i(n)$ des lokalen Standorts und einer Häufung für jedes Lautsprechersignal $z_j(n)$ des lokalen Standorts.;

Mittel (28) zur Berechnung einer ersten Dämpfung $G_{mic}(i,n)$ für jedes Mikrofonsignal $x_i(n)$ des lokalen Standorts ausgehend von einer Beziehung zwischen den durch die Mittel (26) zur Berechnung von Häufungen bereitgestellten Häufungen;

Mittel (30) zum Modifizieren jeder ersten Dämpfung $G_{mic}(i,n)$ derart, um für jedes i, $1 \leq i \leq N$, eine zweite Dämpfung $G'_{mic}(i,n)$ zu erhalten, welche wie folgt definiert ist:

$$G'_{mic}(i,n) = S_1(G_{mic}(i,n))$$

wobei $S_1(G_{mic}(i,n)) = s$ wenn $G_{mic}(i,n) \leq s$,
$S_1(G_{mic}(i,n)) = G_{mic}(i,n)$ wenn $s < G_{mic}(i,n) < 1$ und
$S_1(G_{mic}(i,n)) = 1$ wenn $G_{mic}(i,n) \geq 1$,
wobei s ein vorbestimmter minimaler Schwellwert ist, der ausschließlich kleiner als 1 ist;

Mittel (32) zum Bestimmen für jedes Mikrofonsignal $x_i(n)$ ausgehend von den durch die Mittel (26) zur Berechnung von Häufungen bereitgestellten Häufungen von Mikrofonsignalen und von Lautsprechersignalen, ob dieses Mikrofonsignal $x_i(n)$ gemäß einem ersten Fall ein einzelnes Echosignal oder ein nur vom lokalen Standort stammendes Signal ist, oder ob dieses Mikrofonsignal $x_i(n)$ gemäß einem zweiten Fall vom lokalen Standort stammende Komponenten und andere vom entfernten Standort stammende Komponenten aufweist;

Mittel (34) zum Berechnen für jedes i, $1 \leq i \leq N$, einer dritten Dämpfung $G''_{mic}(i,n)$, die im ersten Fall gleich der zweiten Dämpfung $G'_{mic}(i,n)$ ist und die im zweiten Fall gleich der zweiten Dämpfung $G'_{mic}(i,n)$ ist, bei deren Berechnung der minimale Schwellwert s um einen vorbestimmten Wert erhöht wird;

Mittel (36) zum Berechnen für jedes i, $1 \leq i \leq N$, einer vierten Dämpfung $r(i,n)$ ausgehend von einer Beziehung zwischen den Häufungen der Mikrofonsignale;

Mittel (38) zum Modifizieren jeder vierten Dämpfung $\Gamma(i,n)$, derart, um eine fünfte Dämpfung $\Gamma'(i,n)$ zu erhalten, welche wie folgt definiert ist:

$$\Gamma'(i,n) = S_2(\Gamma(i,n))$$

wobei $S_2(\Gamma(i,n)) = s'$ wenn $\Gamma(i,n)$ S s',
$S_2(\Gamma(i,n)) = \Gamma(i,n)$ wenn $s' < \Gamma(i,n) < 1$ und
$S_2(\Gamma(i,n)) = 1$ wenn $\Gamma(i,n) \geq 1$,

wobei s' ein vorbestimmter minimaler Schwellwert ist, der ausschließlich kleiner als 1 ist; und

Mittel (40) zum Berechnen und Modifizieren für jedes i, $1 \leq i \leq N$, des Produkts der zuvor erhaltenen dritten und der fünften Dämpfungen $G''_{mic}(i,n)$ und $\Gamma'(i,n)$, derart, um die Gewichtungskoeffizienten $\beta_i(n)$ zu erhalten, welche wie folgt definiert sind:

$$\beta_i(n) = S_4(G^*_{mic}(i,n))$$

wobei $G^*_{mic}(i,n) = G''_{mic}(i,n).\Gamma'(i,n)$,
wobei $S_4(G^*_{mic}(i,n)) = s''$ wenn $G^*_{mic}(i,n) \leq s''$ und
$S_4(G^*_{mic}(i,n)) = G^*_{mic}(i,n)$ wenn $s'' < G^*_{mic}(i,n) \leq 1$,
wobei s'' ein vorbestimmter minimaler Schwellwert ist, der ausschließlich kleiner als 1 ist.

8. Vorrichtung nach Anspruch 6, **dadurch gekennzeichnet, dass** die Mittel (24) zur Dekodierung von Schallsignalen umfassen:

Mittel (42) zum Berechnen einer sechsten Dämpfung $G_{HP}(j,n)$ für jedes Lautsprechersignal $z_j(n)$ ausgehend von den für jedes Signal $y_k(n)$ berechneten Häufungen; und

Mittel (44) zum Modifizieren jeder sechsten Dämpfung $G_{HP}(j,n)$, derart, um die Gewichtungskoeffizienten $\lambda_j(n)$ zu erhalten, welche wie folgt definiert sind:

$$\lambda_j(n) = S_3(G_{HP}(j,n))$$

wobei $S_3(G_{HP}(j,n)) = s^*$ wenn $G_{HP}(j,n) \leq s^*$,
$S_3(G_{HP}(j,n)) = G_{HP}(j,n)$ wenn $s^* < G_{HP}(j,n) < 1$ und
$S_3(G_{HP}(j,n)) = 1$ wenn $G_{HP}(j,n) \geq 1$,

wobei $s^*$ ein vorbestimmter minimaler Schwellwert ist, der ausschließlich kleiner als 1 ist.

9. Vorrichtung nach Anspruch 7, **dadurch gekennzeichnet, dass** die Mittel (28) zum Berechnen jeder ersten Dämpfung $G_{mic}(i,n)$ am Ausgang bereitstellen:

$$G_{mic}(i,n) = \frac{Cum_2(x_i(n))}{C. \sum_{j=1}^{M} Cum_2(z_j(n))}$$

wobei $Cum_2(.)$ die die Energie repräsentierende Dämpfung bezeichnet und
wobei C eine vorbestimmte reale Konstante ist, die ausschließlich größer als 1 ist.

10. Vorrichtung nach Anspruch 7, **dadurch gekennzeichnet, dass** die Mittel (36) zum Berechnen jeder vierten Dämpfung $\Gamma(i,n)$ am Ausgang bereitstellen:

$$\Gamma(i,n) = \frac{(Cum_2(x_i(n)))^{N-1}}{\prod_{\substack{q=1 \\ q \neq i}}^{N} Cum_2(x_q(n))}$$

wobei $Cum_2(.)$ die die Energie repräsentierende Dämpfung bezeichnet und
wobei q eine ganze Zahl ist.

**Claims**

1. Method for reducing acoustic echoes and sound spatialization, in a system for the digital transmission of sound signals over P transmission channels, between a local site and at least one remote site, each incorporating N microphones and M loudspeakers, N, M and P being integers, where N and M can differ according to the sites, according to which:

a) a cumulative figure is calculated for each microphone signal $x_i(n)$ from the local site, i being an integer between 1 and N inclusive and n meaning the sampling rate, and a cumulative figure is calculated for each loudspeaker signal $z_j(n)$ from the local site, j being an integer between 1 and M inclusive;
then, for any i, $1 \leq i \leq N$,
b) an initial attenuation $G_{mic}(i, n)$ for the microphone signal $x_j(n)$ from the local site is calculated from a relationship between the cumulative figures obtained previously;

c) the initial attenuation $G_{mic}$ (i, n) is modified so as to obtain a second attenuation $G'_{mic}$ (i, n), defined as follows:

$$G'_{mic} (i,n) = S_1(G_{mic} (i, n))$$

where $S_1(G_{mic} (i, n))$ = s if $G_{mic}$ (i, n) $\leq$ s,
$S_1(G_{mic} (i, n))$ = $G_{mic}$ (i, n) if s < ($G_{mic}$ (i, n) < 1 and
$S_1(G_{mic} (i, n))$ = 1 if $G_{mic}$ (i, n) $\geq$1,
S being a preset minimum threshold which is strictly less than 1;

d) from the microphone and loudspeaker signal cumulative figures calculated previously, we determine
whether the microphone signal $x_i$ (n) is a single echo signal or a signal coming simply from the local site, according to a first case, or
whether the microphone signal $x_i$ (n) has components coming from the local site and other components coming from the remote site, according to a second case;

e) a third attenuation $G''_{mic}$ (i, n) is calculated which, in said first case, is equal to the second attenuation $G'_{mic}$ (i, n) and in said second case is equal to the second attenuation $G'_{mic}$ (i, n) in the calculation, from which the minimum threshold s is incremented by a preset value;

f) a fourth attenuation $\Gamma$ (i, n) is calculated from a relationship between the cumulative figures for the microphone signals;

g) the fourth attenuation $\Gamma$ (i, n) is modified so as to obtain a fifth attenuation $\Gamma'$ (i, n) defined as follows:

$$\Gamma' (i, n) = S_2(\Gamma (i, n))$$

where $S_2(\Gamma (i, n))$ = s' if $\Gamma$ (i, n) $\leq$s',
$S_2(\Gamma (i, n))$ = $\Gamma$ (i, n) if s' < ($\Gamma$ (i, n) < 1 and
$S_2(\Gamma (i, n))$ = 1 if $\Gamma$ (i, n) $\geq$1,
s' being a preset minimum threshold strictly less than 1;

h) the product of the third and fifth attenuations $G''_{mic}$ (i, n) and $\Gamma'$ (i, n) obtained previously is calculated, so as to obtain a total attenuation $G^*_{mic}$ (i, n) defined by:

$$C^*_{mic} (i, n) = G''_{mic} (i, n). \ \Gamma' (i, n);$$

i) the total attenuation $G^*_{mic}$ (i, n) is modified so as to obtain a weighting coefficient $\beta_i$ (n) defined as follows:

$$\beta_i (n) = S_4(G^*_{mic} (i, n))$$

where $S_4(G^*_{mic} (i, n))$ = s" if $(G^*_{mic} (i, n))$ $\leq$s" and
$S_4(G^*_{mic} (i, n))$ = $G^*_{mic}$ (i, n)) ifs" < $G^*_{mic}$ (i, n)) $\leq$1,
s" being a preset minimum threshold strictly less than 1;

j) over each transmission channel is emitted a signal $\gamma_k$ (n), k being an integer between 1 and P inclusive, in the form of a linear combination of weighted microphone signals $x_i$ (n), defined as follows:

$$\gamma_k(n) = \sum_{i=1}^{N} \alpha_{k,i}(n).\beta_i(n).x_i(n)$$

where $\alpha_{k,i}$ (n) means the preset actual coding coefficients and $\beta_i$ (n) means the weighting coefficients obtained previously;

then, for any integer j, 1 $\leq$j $\leq$M:

k) we then calculate, for the loudspeaker signal $z_j$ (n) from the remote site, a sixth attenuation $G_{HP}$ (j, n) from the cumulative figures calculated for each signal $y_k$ (n) transmitted from the local site;

l) the sixth attenuation $G_{HP}$ (j, n) is then modified so as to obtain a weighting factor $\lambda_j$ (n) defined as follows:

$$\lambda_j (n) = S_3 (G_{HP} (j, n))$$

where $S_3 (G_{HP} (j, n)) = s^*$ if $G_{HP} (j, n) \leq s^*$,
$S_3 (G_{HP} (j, n)) = G_{HP} (j, n)$ if $s^* < G_{HP} (j, n) < 1$ and
$S_3 (G_{HP} (j, n)) = 1$ if $G_{HP} (j, n) \geq 1$,
$s^*$ being a preset minimum threshold which is strictly less than 1;
m) the loudspeaker signal $z_j (n)$ from the remote site is then determined from a linear combination of the weighted linear signals $y_k (n)$ transmitted, defined as follows:

$$z_j(n) = \lambda_j(n).\sum_{k=1}^{P} \gamma_{j,k}(n).y_k(n)$$

where $\gamma_{j,k} (n)$ means the preset actual decoding coefficients and where $\lambda_j (n)$ means the weighting coefficients obtained previously; and
n) the loudspeaker signal $z_j (n)$ thus obtained is emitted over the remote site's $j^{th}$ loudspeaker.

2. Method as in Claim 1, according to which, at stage a), the energy from the microphone signals $x_i (n)$ and the loudspeaker signals $z_j (n)$ is chosen as the cumulative figure for said signals and, at stage b), the initial attenuation $G_{mic} (i, n)$ for each microphone signal $x_i (n)$ is calculated from the following equation:

$$G_{mic} (i, n) = \frac{Cum_2(x_i(n))}{C.\sum_{j=1}^{M} Cum_2(z_j(n))}$$

where $Cum_2 (.)$ means the energy and where C is a preset actual constant which is strictly greater than 1.

3. Method as in Claim 1, according to which, at stage a), the energy for the microphone signals $x_i (n)$ is chosen as the cumulative figure for said signals and, at stage (f), the fourth attenuation $\Gamma (i, n)$ for each microphone signal $x_i (n)$ is calculated from the following equation:

$$\Gamma(i, n) = \frac{(Cum_2(x_i(n)))^{N-1}}{\prod_{\substack{q=1 \\ q \neq i}}^{N} Cum_2(x_q(n))}$$

where $Cum_2 (.)$ means the energy and where q is an integer.

4. Method as in any one of Claims 1, 2 and 3, according to which the products $\gamma_{j,k} (n).\lambda_j (n)$, $1 \leq j \leq M$, $1 \leq k \leq P$, are also emitted over the P channels, at the same rate as the sound signals.

5. Method as in any one of Claims 1 to 4, according to which the signals $\gamma_k (n)$ to be transmitted are also broadcast over the local site, employing the local loudspeakers, as well as the signals received from the remote site and at a lower level than the latter.

6. Device for reducing acoustic echoes and sound spatialization, in a digital system for transmitting sound signals over P transmission channels, between a local site and at least one remote site, each incorporating N microphones and M loudspeakers, N, M and P being integers, where the values of N and M can differ according to the sites, **characterized in that** it comprises:

means (20) for coding sound signals, receiving as input N digital signals $x_i$ (n) coming respectively from N microphones at the local site, where i is an integer between 1 and N inclusive, and n is an integer which designates the sample rank, said coding means (20) providing P digital signals $y_k$ (n) as output, where k is an integer between 1 and P inclusive, defined by the following equation

$$y_k(n) = \sum_{i=1}^{N} \alpha_{k,i}(n).\beta_i(n).x_i(n)$$

where $\alpha_{k,i}$ (n) means the preset actual coding coefficients, and
where $\beta_i$ (n) means the weighting coefficients, which depend on the cumulative figures for the signals received by the local site microphones and on the cumulative figures for the signals emitted by the local site loudspeakers,

the P signals $y_k$ (n) being transmitted respectively over the P transmission channels between the local site and the remote site; and
means (24) for decoding sound signals, receiving as input the P signals $\gamma_k$ (n) and providing as output M digital signals $z_j$ (n) to be emitted respectively by the M loudspeakers at each site, where j is an integer between 1 and M inclusive, defined by the following equation:

$$z_j(n) = \lambda_j(n).\sum_{k=1}^{P} \gamma_{j,k}(n).y_k(n)$$

where $\gamma_{j,k}$ (n) means the preset actual decoding coefficients, and
where $\lambda_j$ (n) means the weighting coefficients which depend on the signals $Y_k$ (n).

7. Device as in Claim 6, **characterized in that** said means (20) for coding sound signals comprise:

means (26) for calculating a cumulative figure for each microphone signal $x_i$ (n) from the local site and a cumulative figure for each loudspeaker signal $z_j$ (n) from the local site;
means (28) for calculating an initial attenuation $G_{mic}$ (i, n) for each microphone signal $x_i$ (n) from the local site, from a relationship between the cumulative figures provided by said means (26) for calculating cumulative figures;
means (30) for modifying each initial attenuation $G_{mic}$ (i, n) so as to obtain, for any i, $1 \leq i \leq N$, a second attenuation $G'_{mic}$ (i, n) defined as follows:

$$G'_{mic} (i, n) = S_1(G_{mic} (i, n))$$

where $S_1(G_{mic} (i, n))$ = s if $G_{mic} (i, n) \leq s$,
$S_1(G_{mic} (i, n))$ = $G_{mic} (i, n)$ if s < ($G_{mic} (i, n)$) < 1 and
$S_1(G_{mic} (i, n))$ = 1 if $G_{mic} (i, n) \geq 1$,

s being a preset minimum threshold which is strictly less than 1;
means (32) for determining, for each microphone signal $x_i$ (n), from the cumulative microphone signal and loudspeaker signal figures provided by said means (26) for calculating cumulative figures,
if said microphone signal $x_i$ (n) is an echo signal alone or a signal coming only from the local site, according to a first case, or
if said microphone signal $x_i$ (n) has components coming from the local site and other components coming from the remote site, in a second case;
means (34) for calculating, for any i, $1 \leq i \leq N$, a third attenuation $G''_{mic}$ (i, n) which, in said first case, is equal to the second attenuation $G'_{mic}$ (i, n) and, in said second case, is equal to the second attenuation $G'_{mic}$ (i, n) in the calculation where the minimum threshold s is increased by a preset value; means (36) for calculating, for any i, 1 $\leq i \leq N$, a fourth attenuation $\Gamma$ (i, n) from a relationship between the microphones signal cumulative figures;

means (38) for modifying each fourth attenuation $\Gamma$ (i, n) so as to obtain a fifth attenuation $\Gamma'$ (i, n), defined as follows:

$$\Gamma' (i, n) = S_2(\Gamma (i, n))$$

where $S_2(\Gamma (i, n)) = s'$ if $\Gamma (i, n) \leq s'$.
$S_2(\Gamma (i, n)) = \Gamma (i, n)$ if $s' < (\Gamma (i, n) < 1$ and
$S_2(\Gamma (i, n)) = 1$ if $\Gamma (i, n) \geq 1$,
s' being a preset minimum threshold strictly less than 1; and
means (40) for calculating and modifying, for any i, $1 \leq i \leq N$, the product of the third and fifth attenuations $G''_{mic}$ (i, n) and $\Gamma'$ (i, n) obtained previously, so as to obtain said weighting coefficients $\beta_i$ (n), defined as follows:

$$\beta_i (n) = S_4(G^*_{mic} (i, n))$$

where $G^*_{mic}$ (i, n) = $G''_{mic}$ (i, n). $\Gamma'$ (I, n),
where $S_4(G^*_{mic}$ (i, n)) = s" if $(G^*_{mic}$ (i, n)) $\leq$ s" and
$S_4(G^*_{mic}$ (i, n)) = $G^*_{mic}$ (i, n)) if s" < $G^*_{mic}$ (i, n)) $\leq 1$,
s" being a preset minimum threshold strictly less than 1.

8. Device as in Claim 6, **characterized in that** said means (24) for decoding sound signals comprise:

means (42) for calculating, for each loudspeaker signal $z_j$ (n), a sixth attenuation $G_{HP}$ (j, n) from the cumulative figures calculated for each signal $y_k$ (n); and means (44) for modifying each sixth attenuation $G_{HP}$ (j, n) so as to obtain said weighting coefficients $\lambda_j$ (n), defined as follows:

$$\lambda_j (n) = S_3 (G_{HP} (j, n))$$

where $S_3 (G_{HP} (j, n)) = s^*$ if $(G_{HP} (j, n) \leq s^*$,
$S_3 (G_{HP} (j, n)) = G_{HP} (j, n)$ if $s^* < G_{HP} (j, n) < 1$ and
$S_3 (G_{HP} (j, n)) = 1$ if $(G_{HP} (j, n) \geq 1$,

$s^*$ being a preset minimum threshold which is strictly less than 1.

9. Device as in Claim 7, **characterized in that** said means (28) for calculating each initial attenuation ($G_{mic}$ (i, n) provide as output:

$$G_{mic} (i, n) = \frac{Cum_2(x_i(n))}{C.\sum_{j=1}^{M} Cum_2(z_j(n))}$$

where $Cum_2$ (.) means the cumulative figure representing the energy and where C is a preset actual constant which is strictly greater than 1.

10. Device as in Claim 7, **characterized in that** said means (36) for calculating each initial attenuation $\Gamma$(i, n) provide as output:

$$\Gamma(i, n) = \frac{(Cum_2(x_i(n)))^{N-1}}{\prod_{\substack{q=1 \\ q \neq i}}^{N} Cum_2(x_q(n))}$$

where $Cum_2$ (.) means the cumulative figure representing the energy and where q is an integer.

# *FIG.1*

10

# *FIG.3*

$$x_i(n) \quad 1 \leqslant i \leqslant N$$

$$y_k(n) \quad 1 \leqslant k \leqslant P$$

$$z_j(n) \quad 1 \leqslant j \leqslant M$$

20  22  24

# *FIG.5*

24

$$G_{HP}$$

$$\lambda_j$$

42  44

# FIG.2

$$Cum_2 \; (x_i(n)) \;, \; 1 \leqslant i \leqslant N$$
$$Cum_2 \; (z_j(n)) \;, \; 1 \leqslant j \leqslant M$$

$$G_{mic} \; (i,n) \;, \; 1 \leqslant i \leqslant N$$

$$G'_{mic}(i,n) \;, \; 1 \leqslant i \leqslant N$$

$$G''_{mic} \; (i,n) \;, \; 1 \leqslant i \leqslant N$$

$$\Gamma \, (i,n) \;, \; 1 \leqslant i \leqslant N$$

$$\Gamma'(i,n) \;, \; 1 \leqslant i \leqslant N$$

$$\beta_i \; (n) \;, \; 1 \leqslant i \leqslant N$$

$$y_k(n) \;, \; 1 \leqslant k \leqslant P$$

$$G_{HP} \; (j,n) \;, \; 1 \leqslant j \leqslant M$$

$$\lambda_j(n) \;, \; 1 \leqslant j \leqslant M$$

$$z_j(n) \;, \; 1 \leqslant j \leqslant M$$

à l'émission

pour la transmission

à la réception

# FIG.4